# EUROPEAN PATENT SPECIFICATION

(11) **EP 3 971 612 B1**
(45) Date of publication and mention of the grant of the patent: **13.03.2024**
(21) Application number: 19928899.4
(22) Date of filing: 14.05.2019
(51) Int. Cl.: G01S 13/90, B64G 1/10, B64G 1/24, G01C 11/02

(54) **FORMATION FLIGHT CONTROL DEVICE, OBSERVATION SATELLITE, GROUND STATION, FORMATION FLIGHT SYSTEM, SAND OBSERVATION SYSTEM, FORMATION FLIGHT CONTROL METHOD, AND PROGRAM**
FORMATIONSFLUGSTEUERUNGSVORRICHTUNG, BEOBACHTUNGSSATELLIT, BODENSTATION, FORMATIONSFLUGSYSTEM, SANDBEOBACHTUNGSSYSTEM, FORMATIONSFLUGSTEUERUNGSVERFAHREN UND PROGRAMM
DISPOSITIF DE COMMANDE DE VOL EN FORMATION, SATELLITE D'OBSERVATION, STATION TERRESTRE, SYSTÈME DE VOL EN FORMATION, SYSTÈME D'OBSERVATION DE SABLE, PROCÉDÉ DE COMMANDE DE VOL EN FORMATION ET PROGRAMME

(43) Date of publication of application: 23.03.2022
(73) Proprietor: MITSUBISHI ELECTRIC CORPORATION, Chiyoda-ku Tokyo 100-8310 (JP)
(72) Inventor: KAWAMURA, Masanori, Tokyo 100-8310 (JP); TAKAHARA, Osamu, Tokyo 100-8310 (JP); YOKOYAMA, Eiji, Tokyo 100-8310 (JP)
(74) Representative: Meissner Bolte Partnerschaft mbB
(86) International application number: PCT/JP2019/019020
(87) International publication number: WO 2020/230252

(56) References cited:
- CN-A- 108 382 608
- JP-A- 2000 111 359
- JP-A- 2000 111 359
- JP-A- 2000 235 074
- JP-A- 2000 235 074
- JP-A- 2008 126 876
- US-A- 4 602 257
- US-A- 4 602 257
- US-A1- 2018 172 823
- US-A1- 2018 172 823
- FARQUHARSON GORDON ET AL: "The Capella Synthetic Aperture Radar Constellation", IGARSS 2018 - 2018 IEEE INTERNATIONAL GEOSCIENCE AND REMOTE SENSING SYMPOSIUM, IEEE, 22 July 2018 (2018-07-22), pages 1873-1876, XP033437879, DOI: 10.1109/IGARSS.2018.8518683 [retrieved on 2018-10-31]
- FARQUHARSON, G. et al.: "The capella synthetic aperture radar constellation", EUSAR 2018, 16 August 2018 (2018-08-16), pages 1873-1876, XP033437879, Retrieved from the Internet: URL:https://ieeexplore.ieee.org/document/8 438213 [retrieved on 2019-07-17]

## Description

### Technical Field

The present invention relates to a formation flight control device, an observation satellite, a ground station, a formation flight system, a sand observation system, a formation flight control method, and a program.

### Background Art

Example means for observing a wide area of the ground surface of a celestial body and imaging the area includes a synthetic-aperture radar (SAR) that is mounted on, for example, an aircraft or an artificial satellite and generates an observation image of the ground surface through microwave communication, see JP 2000 111359 A. An increase in the resolution of a SAR reduces the received power per pixel, thus lowering the signal-to-noise ratio (SNR) of observation images. Although the SNR may be improved by increasing the transmission power, a machine depending on the power generated by a solar battery, such as an artificial satellite, cannot easily have greatly increased transmission power.

Patent Literature 1 describes a technique with which synthetic-aperture radars mounted on multiple artificial satellites observe one target from different angles of incidence, and the resultant frequency spectra are synthesized to equivalently widen the transmission frequency band for raising the resolution of observation images in proportion to the increased bandwidth.

### Citation List

### Patent Literature

Patent Literature 1: Unexamined Japanese Patent Application Publication JP 2000-235074 A

### Summary of the Invention

### Technical Problem

The technique in Patent Literature 1 for virtually widening a frequency band can increase resolution without reducing the received power per pixel. However, the signal-to-noise ratio of observation images is difficult to improve.

In response to the above issue, an objective of the present invention is to improve the signal-to-noise ratio of observation images.

### Solution to the Problem

To achieve the above objective, a formation flight control device according to an aspect of the present invention is a device for generating and outputting orbit control information for controlling observation satellites in an observation satellite group orbiting a celestial body and sequentially observing a ground surface of the celestial body with an observation interval. The formation flight control device includes orbit information acquisition means, orbit control information generation means, and orbit control information. The orbit information acquisition means acquires orbit information indicating an observation time of a preceding observation satellite of which an observation order precedes by one, and an orbit of the preceding observation satellite at the observation time. The orbit control information generation means generates, based on the orbit information, the orbit control information indicating an orbit and a phase allowing flying, after the observation interval, vertically above an intersection point between the ground surface and a straight line connecting a center of the celestial body and the preceding observation satellite at the observation time. The orbit control information output means outputs the orbit control information.

### Advantageous Effects of the Invention

The formation flight control device according to the above aspect of the present invention generates and outputs the orbit control information indicating an orbit and a phase allowing flying, after the observation interval, vertically above an intersection point between the ground surface and a straight line connecting a center of the celestial body and the preceding observation satellite at the observation time. Thus, the formation flight control device according to the present invention enables all the observation satellites in the observation satellite group to observe the same observation region at the same observation angle and improves the signal-to-noise ratio of the observation image.

### Brief Description of Drawings

- FIG. 1: is a block diagram of a formation flight system according to Embodiment 1 of the present invention;
- FIG. 2: is a diagram describing the orbits of multiple observation satellites in an observation satellite group;
- FIG. 3: is a diagram showing an observation satellite observing a celestial body with a synthetic-aperture radar;
- FIG. 4: is a diagram showing the observation geometry of observation satellites;
- FIG. 5: is a functional block diagram of an observation satellite;
- FIG. 6: is a diagram describing parameters included in orbital elements;
- FIG. 7: is a hardware block diagram of a formation flight control device;
- FIG. 8: is a flowchart of an orbit control information generation process;
- FIG. 9: is a diagram describing the orbits of multiple observation satellites in an observation satellite group according to Embodiment 2 of the present invention;
- FIG. 10: is a block diagram of a formation flight system according to Embodiment 3 of the present invention;
- FIG. 11: is a functional block diagram of a ground station;
- FIG. 12: is a functional block diagram of an observation satellite;
- FIG. 13: is a diagram describing a scheme of communication between observation satellites and between the observation satellites and a ground station according to Embodiment 4 of the present invention;
- FIG. 14: is a diagram describing another scheme of communication between the observation satellites and between the observation satellites and the ground station;
- FIG. 15: is a block diagram of a sand observation system according to Embodiment 5 of the present invention;
- FIG. 16: is a block diagram of a sand observation system according to Embodiment 6 of the present invention;
- FIG. 17: is a functional block diagram of a 3D terrain estimator;
- FIG. 18: is a diagram showing a composite image and a real terrain;
- FIG. 19: is a schematic diagram showing a model in which a terrain estimator has recognized a cone;
- FIG. 20: is a diagram showing a composite image and a real terrain; and
- FIG. 21: is a schematic diagram showing a model in which a terrain estimator has recognized a cone.

### Description of Embodiments

Embodiments of the present invention will now be described in detail with reference to the drawings.

### Embodiment 1

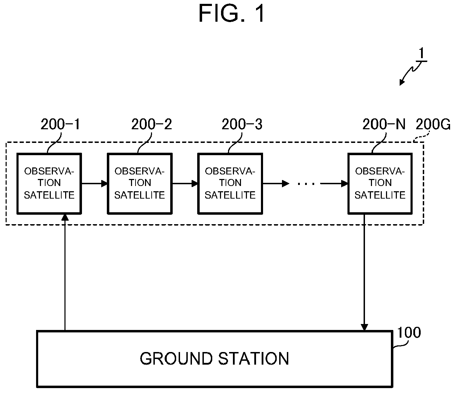

As shown in FIG. 1, a formation flight system 1 according to Embodiment 1 of the present invention includes an observation satellite group 200G of N (which is a natural number of at least two) observation satellites 200-1, 200-2, 200-3, ..., and 200-N each having a synthetic-aperture radar, and a ground station 100 that communicates with the observation satellite group 200G. The N observation satellites 200-1, 200-2, 200-3, ..., and 200-N may be referred to as the observation satellites 200 without distinguishing the individual observation satellites. The ground station 100 and the observation satellite group 200G are connected to allow wireless communication in accordance with a satellite communication protocol, and adjacent observation satellites 200 in the observation satellite group 200G are also connected in the same manner.

The ground station 100 communicates with the observation satellites 200 included in the observation satellite group 200G. In the present embodiment, the ground station 100 transmits observation instruction information for observation to the observation satellite 200-1 in the observation satellite group 200G, and receives, from the observation satellite 200-N, observation information indicating observations and sequentially updated and transferred by the observation satellites 200 in the observation satellite group 200G. The observation instruction information and the observation information will be described later.

The observation satellite group 200G includes the N adjacent observation satellites 200 arranged in the order of the observation satellites 200-1, 200-2, 200-3, ..., and 200-N and flying in different orbits with a fixed space between adjacent satellites. Each observation satellite 200 includes a formation flight control device 210 that generates orbit control information based on observation information acquired from the preceding observation satellite denoted by 200F.

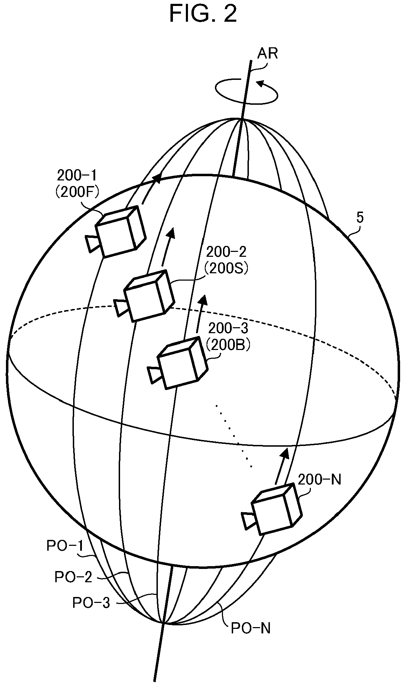

As shown in FIG. 2, the observation satellites 200 are artificial satellites for observing the ground surface state of a celestial body 5 that is an observation target while orbiting the celestial body 5. The observation satellites 200-1, 200-2, 200-3, ..., and 200-N fly sequentially in different orbits with a fixed space between adjacent satellites. More specifically, the observation satellites 200-1, 200-2, 200-3, ..., and 200-N move in polar orbits PO-1, PO-2, PO-3, ..., and PO-N that cross the axis of rotation AR and pass above or through the vicinity of the north pole and the south pole of the celestial body 5.

The N polar orbits PO-1, PO-2, PO-3, ..., and PO-N may be referred to as the polar orbits PO without distinguishing the individual polar orbits. An observation satellite 200 to be described will be referred to as a target observation satellite 200S. The observation satellite 200 that is followed by the target observation satellite 200S in a flying order and an observation order will be referred to as a preceding observation satellite 200F. The observation satellite 200 that follows the target observation satellite 200S in a flying order and an observation order will be referred to as a succeeding observation satellite 200B.

For example, in FIG. 2, when the observation satellite 200-2 is the target observation satellite 200S, the observation satellite 200-1 is the preceding observation satellite 200F, and the observation satellite 200-3 is the succeeding observation satellite 200B.

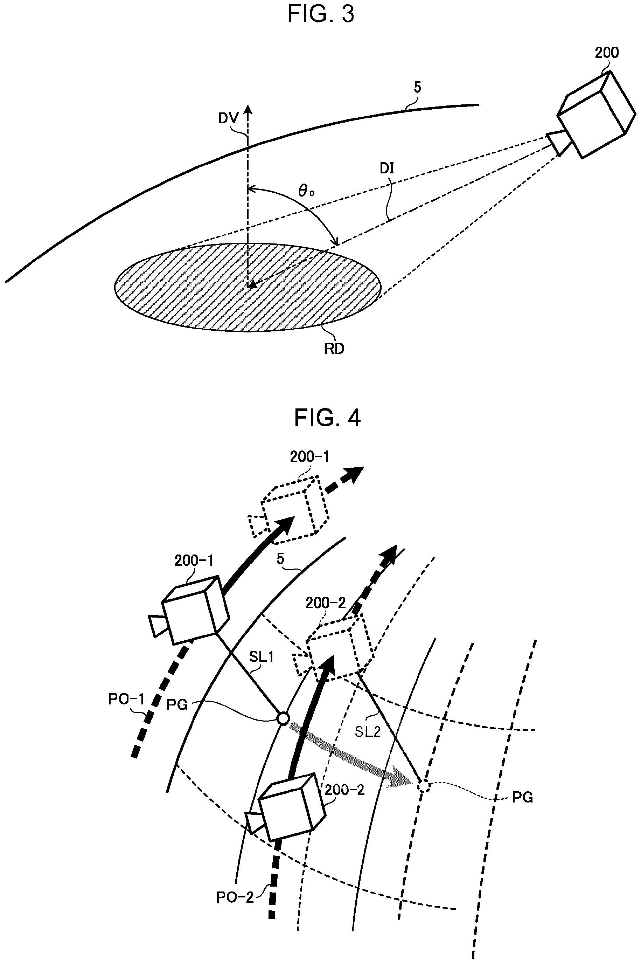

As shown in FIG. 3, each observation satellite 200 having a synthetic-aperture radar observes the ground surface state of the celestial body 5 by emitting a microwave obliquely downward to the ground surface of the celestial body 5 at an angle of incidence θ₀ and receiving a wave reflected from the radio wave irradiation region irradiated with the microwave, denoted by RD. The celestial body 5 is specifically a satellite or a planet such as the Earth, Mars, or the Moon. The direction from the center of the celestial body 5 to the center of the radio wave irradiation region RD is indicated by a vertical direction DV, and the direction of the incident microwave emitted from the observation satellite 200 is denoted by DI. The angle between the vertical direction DV and the direction DI is the angle of incidence θ₀.

The observation geometry in the present embodiment will now be described with reference to FIG. 4. For example, as shown in FIG. 4, the observation satellite 200-1 moves in the polar orbit PO-1 around the celestial body 5, and the observation satellite 200-2 moves in the polar orbit PO-2 around the celestial body 5. At the observation time of the observation satellite 200-1, a straight line SL1 connecting the observation satellite 200-1 and the center of the celestial body 5 intersects the ground surface at an observation ground surface point PG.

The observation ground surface point PG moves with the rotation of the celestial body 5. The observation satellite 200-2 undergoes orbit control performed by the formation flight control device 210 and an orbit controller 230 included in the observation satellite 200-2 to cause a straight line SL2 connecting the succeeding observation satellite 200-2 and the center of the celestial body 5 to intersect the ground surface at the observation ground surface point PG when an observation interval elapses from the observation time of the observation satellite 200-1 preceding the observation satellite 200-2. The time when the observation interval elapses from the observation time of the preceding observation satellite 200F may be simply referred to as the time after the observation interval.

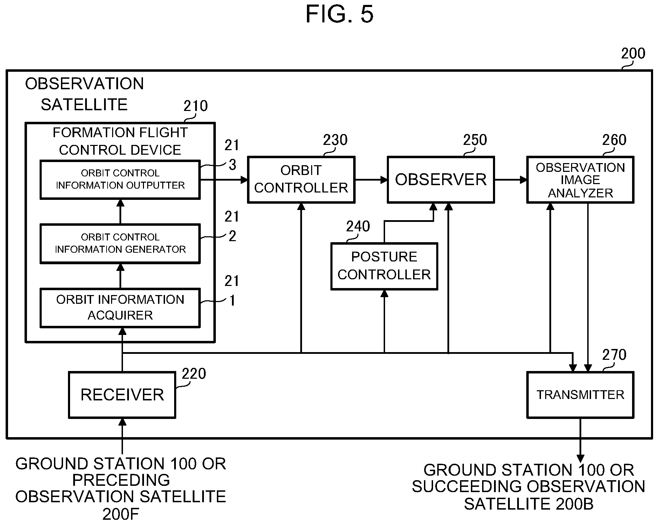

The functional components of the observation satellite 200 will now be described. As shown in FIG. 5, the observation satellite 200 includes an orbit information acquirer 211, an orbit control information generator 212, and an orbit control information outputter 213 that are included in the formation flight control device 210, a receiver 220, the orbit controller 230, a posture controller 240, an observer 250, an observation image analyzer 260, and a transmitter 270.

The orbit information acquirer 211 acquires, based on the observation information acquired from the preceding observation satellite 200F through the receiver 220, observation region information, observation angle information, observation interval information, observation time information indicating the observation time of the preceding observation satellite 200F, and orbit information about the preceding observation satellite 200F at the observation time of the preceding observation satellite 200F, and feeds the acquired information to the orbit control information generator 212. The orbit information acquirer 211 is an example of orbit information acquisition means in an aspect of the present invention.

The orbit control information generator 212 uses the various information items acquired from the orbit information acquirer 211 to generate orbit control information indicating the orbit and the phase in which the target observation satellite 200S flies, when the observation interval elapses from the observation time of the preceding observation satellite 200F, vertically above the intersection point between the ground surface of the celestial body 5 and the straight line connecting the center of the celestial body 5 and the preceding observation satellite 200F at the observation time of the preceding observation satellite 200F. The orbit control information generator 212 feeds the generated orbit control information to the orbit control information outputter 213. The orbit control information generator 212 is an example of orbit control information generation means in an aspect of the present invention.

The orbit control information outputter 213 outputs the orbit control information acquired from the orbit control information generator 212 to the orbit controller 230. The orbit control information outputter 213 is an example of orbit control information output means in an aspect of the present invention.

The receiver 220 may be implemented by a receiving antenna that receives a radio signal and a reception circuit that performs a reception process such as analog-digital conversion, demodulation, or decoding on the received radio signal. The receiver 220 receives the observation instruction information transmitted from the ground station 100 or the observation information transmitted from the preceding observation satellite 200F, and subjects the received observation instruction information and observation information to the reception process before outputting the information. When receiving observation instruction information transmitted from the ground station 100, that is, observation instruction information to be transmitted to the observation satellite 200-1 of which a flying order and an observation order are the earliest, the receiver 220 feeds the observation instruction information to the components other than the formation flight control device 210. The receiver 220 is an example of reception means in an aspect of the present invention.

The observation instruction information includes, for example, observation region information, observation angle information, and observation interval information. The observation region information indicates an observation region that is an observation target. Based on the observation region information, each observation satellite 200 uses the synthetic-aperture radar to emit a microwave to the observation region.

The observation angle information indicates an observation angle to the observation region. The observation angle is specifically the angle of the microwave incident on the observation region. The observation satellite 200 uses the synthetic-aperture radar to emit the microwave to the observation region at the angle of incidence indicated by the observation angle information.

The observation interval information indicates intervals of time at which the observation satellites 200 observe the observation region. More specifically, the observation interval information indicates the time from when the preceding observation satellite 200F observes the observation region to when the target observation satellite 200S observes the same observation region.

The observation information includes the above observation instruction information, the observation time of each observation satellite 200, the orbit information about the observation satellite 200 at the observation time, and a composite image. The orbit information is expressed by, for example, orbital elements indicating the orbit and the movement of the observation satellite 200. The orbital elements include parameters such as a semi-major axis (a), an eccentricity (e), an orbital inclination (i), the right ascension of the ascending node S2, an argument of periapsis ω, and a time of periapsis passage T.

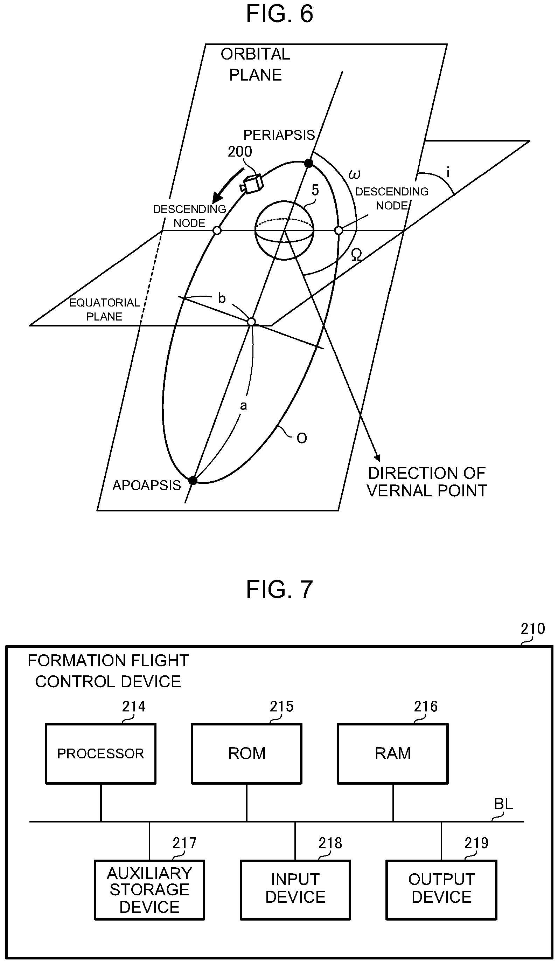

As shown in FIG. 6, with the observation satellite 200 in an orbit O that is elliptical, the semi-major axis, a, is half of the major axis of the orbit O. The eccentricity, e, is a parameter that defines the absolute shape of the orbit O and a measure of the flattening of the orbit O. The orbit O becomes more circular with decreasing eccentricity, e, and more elliptical with increasing eccentricity. The eccentricity, e, is defined by e = √(1 - (b/a)²), where b denotes the semi-minor axis, or half of the minor axis of the orbit O.

The orbital inclination, i, is the angle formed by the equatorial plane of the celestial body 5 and the orbital plane. The right ascension of the ascending node S2 is the longitude of the ascending node where the orbit O crosses the equatorial plane of the celestial body 5 from south to north, and a measure of rotation of the ascending node in the rotational direction of the celestial body 5 from a reference position represented by the vernal point.

The argument of periapsis ω is, as viewed from the center of gravity of the celestial body 5, the angle formed by the ascending node and the periapsis, or the position at which the orbit O is nearest the center of gravity of the celestial body 5, and measured in the rotational direction of the celestial body 5 from the ascending node. The time of periapsis passage T is the time when the celestial body 5 passes through the periapsis.

The composite image is produced by sequentially subjecting observation images acquired by the observation satellites 200 included in the observation satellite group 200G to pixel integration.

The orbit controller 230 controls the orbit of the observation satellite 200 based on the observation instruction information received from the receiver 220 or the orbit control information received from the orbit control information outputter 213 in the formation flight control device 210. For example, the orbit controller 230 controls the orbit of the target observation satellite 200S by causing the thrusters to inject a propellant for thrust production in accordance with the orbit control information. Upon completion of the orbit control for the target observation satellite 200S, the orbit controller 230 outputs an orbit control completion signal for indicating the completion to the observer 250. The orbit controller 230 is an example of orbit control means in an aspect of the present invention.

The posture controller 240 controls the posture of the observation satellite 200 based on the observation instruction information or the observation information acquired through the receiver 220. More specifically, the posture controller 240 calculates the relative posture of the preceding observation satellite 200F to the celestial body 5 at the observation time of the preceding observation satellite 200F based on (the observation time information about the preceding observation satellite 200F extracted from) the observation information acquired from the preceding observation satellite 200F.

The posture controller 240 then controls the reaction wheel, the control moment gyroscope (CMG), and the thrusters to control the posture of the target observation satellite 200S, allowing the target observation satellite 200S to have the same relative posture as the calculated relative posture after the observation interval. Upon completion of the posture control for the target observation satellite 200S, the posture controller 240 outputs a posture control completion signal for indicating the completion to the observer 250. The posture controller 240 is an example of posture control means in an aspect of the present invention.

The observer 250 is implemented by, for example, a synthetic-aperture radar and observes an observation region on the celestial body 5. After the observer 250 receives the orbit control completion signal from the orbit controller 230 and the posture control completion signal from the posture controller 240, and when the observation interval elapses from the observation time of the preceding observation satellite 200F, the observer 250 emits a microwave to a target region and receives the resultant reflected wave to generate an observation image representing the state of the observation region. The observer 250 outputs the generated observation image to the observation image analyzer 260. The observer 250 is an example of observation means in an aspect of the present invention.

The observation image analyzer 260 integrates the pixels of the composite image generated by the preceding observation satellite 200F and included in the observation information acquired from the preceding observation satellite 200F and the observation image generated by the observer 250 to generate a new composite image. The observation image analyzer 260 outputs the generated composite image to the transmitter 270. The observation image analyzer 260 is an example of observation image analysis means in an aspect of the present invention.

The transmitter 270 may be implemented by a reception circuit and a transmitting antenna that transmits a radio signal. The reception circuit performs a transmission process such as encoding, modulation, or digital-analog conversion on the composite image received from the observation image analyzer 260, the observation time of the target observation satellite 200S, the orbit information about the target observation satellite 200S at the observation time, and the observation instruction information received from the receiver 220. The transmitter 270 subjects the composite image, the observation time, the orbit information, and the observation instruction information to the transmission process before transmitting the resultant information to the ground station 100 or the succeeding observation satellite 200B as observation information. The transmitter 270 is an example of transmission means in an aspect of the present invention.

The hardware configuration of the formation flight control device 210 will now be described. As shown in FIG. 7, the formation flight control device 210 includes, as its physical units, a processor 214, a read-only memory (ROM) 215, a random-access memory (RAM) 216, an auxiliary storage device 217, an input device 218, and an output device 219. The units are electrically connected with one another with a bus line BL.

The processor 214 is an arithmetic unit such as a central processing unit (CPU). The processor 214 reads a program and data from the ROM 215 or the auxiliary storage device 217 onto the RAM 216 and executes the program and data to implement various functions of the formation flight control device 210.

The ROM 215 is a non-volatile memory for storing programs to be executed by the processor 214 and data used in the program execution. For example, the ROM 215 stores programs and data associated with an orbit control information generation process described later.

The RAM 216 is a volatile memory for temporarily holding a program and data read from the ROM 215 and the auxiliary storage device 217, and serves as a work area for the processor 214.

The auxiliary storage device 217 is a non-volatile storage device such as a hard disk drive (HDD) or a solid state drive (SSD) that allows overwriting of stored content. For example, the auxiliary storage device 217 stores programs to be executed by the processor 214, data used in the program execution, and data generated from the program execution.

The input device 218 is an input interface that allows various information items to be input from the outside to the formation flight control device 210. For example, the observation information received by the receiver 220 is input.

The output device 219 is an output interface that allows various information items to be output from the formation flight control device 210. For example, the orbit control information is output to the orbit controller 230.

The orbit information acquirer 211 shown in FIG. 5 is implemented by, for example, the processor 214, the ROM 215, the RAM 216, and the input device 218. The orbit control information generator 212 is implemented by, for example, the processor 214, the ROM 215, and the RAM 216. The orbit control information outputter 213 is implemented by, for example, the output device 219.

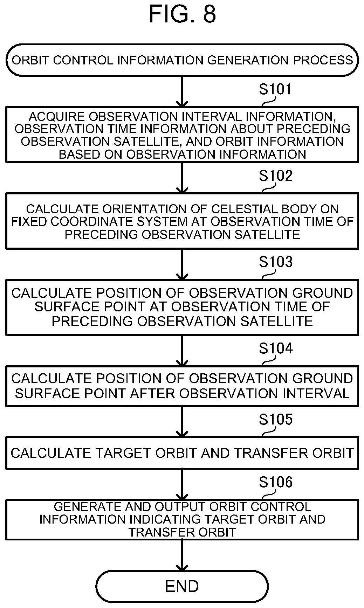

The orbit control information generation process performed by the orbit control information generator 212 in the formation flight control device 210 will now be described with reference to the flowchart shown in FIG. 8. The orbit control information generation process uses the observation information from the preceding observation satellite 200F to generate orbit control information that allows the observation region observed by the preceding observation satellite 200F to be observed at the same observation angle. When receiving the observation information on the preceding observation satellite 200F from the receiver 220, the orbit control information generator 212 starts the orbit control information generation process.

After starting the orbit control information generation process, the orbit control information generator 212 first acquires the observation interval information, the observation time information about the preceding observation satellite 200F, and the orbit information about the preceding observation satellite 200F at the observation time based on the observation information on the preceding observation satellite 200F acquired through the input device 218 (step S101).

The orbit control information generator 212 then calculates the orientation of the celestial body 5 relative to the preceding observation satellite 200F at the observation time of the preceding observation satellite 200F (step S102). For example, the orbit control information generator 212 may indicate the orientation of the celestial body 5 at the observation time of the preceding observation satellite 200F based on a fixed coordinate system such as the horizontal coordinate system or the equatorial coordinate system. When the celestial body 5 to be observed is the Earth, the orientation of the celestial body 5 can be expressed in terms of longitude and latitude.

The orbit control information generator 212 then calculates the position taken by an observation ground surface point PG at the observation time of the preceding observation satellite 200F (step S103). The orbit control information generator 212 determines the observation ground surface point PG as the intersection point between the ground surface and the straight line SL1 connecting the center of the celestial body 5 and the preceding observation satellite 200F at the observation time of the preceding observation satellite 200F, and calculates the position of the observation ground surface point PG (see FIG. 3).

The orbit control information generator 212 then calculates the position of the observation ground surface point PG after the observation interval (step S 104). The orbit control information generator 212 determines the observation ground surface point PG as the intersection point between the ground surface and the straight line SL2 connecting the center of the celestial body 5 and the target observation satellite 200S after the observation interval, and calculates the position of the observation ground surface point PG (see FIG. 4).

The orbit control information generator 212 then calculates the target orbit and the transfer orbit of the target observation satellite 200S (step S 105). The target orbit of the target observation satellite 200S is an orbit in which, after the observation interval, the target observation satellite 200S passes vertically above the observation ground surface point PG calculated in step S 104. Calculating the target orbit involves a degree of freedom in the altitude of the target observation satellite 200S vertically above the observation ground surface point PG.

The altitude of the target observation satellite 200S in the target orbit may be, for example, the altitude at which the target observation satellite 200S is currently flying, the altitude at which the preceding observation satellite 200F passes vertically above the observation ground surface point PG, or the altitude input from an external device such as the ground station 100. The velocity vector in the target orbit may be the relative velocity vector of the preceding observation satellite 200F passing vertically above the observation ground surface point PG, relative to the celestial body 5.

The orbit control information generator 212 then calculates the transfer orbit of the target observation satellite 200S from the current orbit to the target orbit. For example, the orbit control information generator 212 uses particle swarm optimization (PSO), an optimization technique for searching developed based on swarm behavior of animals, to calculate the transfer orbit that minimizes the amount of propellant used..

After performing the processing in step S105, the orbit control information generator 212 generates orbit control information indicating the target orbit and the transfer orbit, feeds the generated orbit control information to the orbit control information outputter 213 (step S106), and ends the orbit control information generation process.

As described above, the formation flight control device 210 according to the present embodiment calculates the position of the observation ground surface point PG at the observation time of the preceding observation satellite 200F and the position of the observation ground surface point PG after the observation interval, and generates the orbit control information indicating the target orbit and the transfer orbit that allow the target observation satellite 200S after the observation interval to pass vertically above the observation ground surface point PG after the observation interval.

The orbit of the target observation satellite 200S is controlled based on the generated orbit control information. This orbit control enables all the observation satellites 200 in the observation satellite group 200G to observe the same observation region at the same observation angle. The observation images acquired by the observation satellites 200 are sequentially subjected to pixel integration to generate a composite image, enabling the observation image to have an improved signal-to-noise ratio.

### Embodiment 2

In Embodiment 1, as described above, the observation satellites 200 included in the observation satellite group 200G fly in the polar orbits PO that pass above or through in the vicinity of the north pole and the south pole of the celestial body 5. However, polar regions of the celestial body 5 may not be observed in some actual operations. In Embodiment 2, observation satellites 200 move in non-polar orbits passing off the polar regions of the celestial body 5. To avoid redundancy, the differences from Embodiment 1 will now be mainly described.

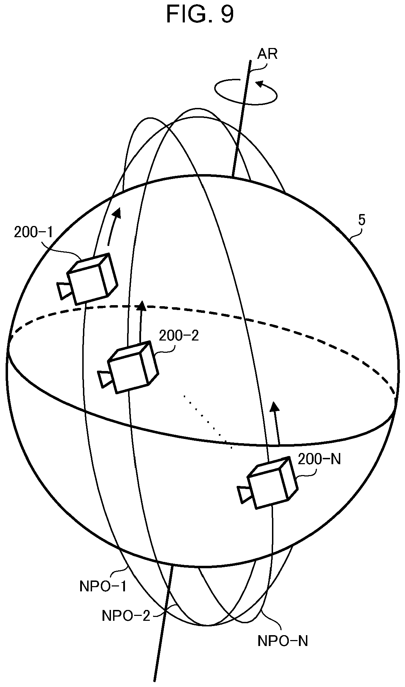

In the present embodiment, as shown in FIG. 9, the observation satellites 200-1, 200-2, ..., and 200-N move in non-polar orbits NPO-1, NPO-2, ..., and NPO-N that do not cross the axis of rotation AR of the celestial body 5 or do not pass above or through the vicinity of the north pole and the south pole.

Thus, the formation flight system 1 according to Embodiment 2 also enables all the observation satellites 200 included in the observation satellite group 200G to observe the same observation region at the same observation angle and improves the signal-to-noise ratio of the composite image produced by sequentially subjecting observation images acquired by the observation satellites 200 to pixel integration. The formation flight system 1 according to the present embodiment is specifically effective for an observation target that is a low-latitude region.

### Embodiment 3

In Embodiments 1 and 2, as described above, the ground station 100 transmits observation instruction information to the observation satellite 200-1 of which a flying order and an observation order are the earliest in the observation satellite group 200G, and receives, from the observation satellite 200-N of which a flying order and an observation order are the latest, observation information sequentially updated and transferred by the observation satellites 200 in the observation satellite group 200G. In Embodiment 3, however, each of the observation satellites 200 in the observation satellite group 200G communicates with the ground station 100. The differences from Embodiments 1 and 2 will now be mainly described.

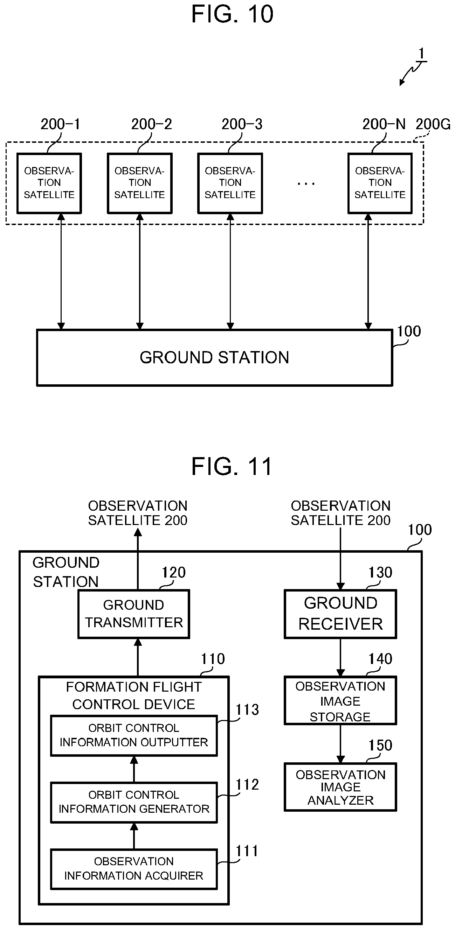

As shown in FIG. 10, the formation flight system 1 according to Embodiment 3 includes the ground station 100 that communicates with each of the observation satellites 200 in the observation satellite group 200G, and the observation satellite group 200G of the N observation satellites 200-1, 200-2, 200-3, ..., and 200-N that observe an observation region indicated based on observation instruction information received from the ground station 100 and transmit observation information including an observation image to the ground station 100.

In the formation flight system 1 according to Embodiment 3, unlike Embodiments 1 and 2, the ground station 100 includes a formation flight control device 110, whereas each of the observation satellites 200 in the observation satellite group 200G includes no formation flight control device 210, as shown in FIG. 11.

As shown in FIG. 11, the ground station 100 according to Embodiment 3 includes, as its functional units, an orbit information acquirer 111, an orbit control information generator 112, and an orbit control information outputter 113 that are included in the formation flight control device 110, a ground transmitter 120, a ground receiver 130, an observation image storage 140, and an observation image analyzer 150.

The orbit information acquirer 111 acquires, from an external source, observation region information, observation angle information, observation interval information, observation time information indicating the observation time of the preceding observation satellite 200F, and orbit information about the preceding observation satellite 200F at the observation time of the preceding observation satellite 200F, and feeds the acquired information to the orbit control information generator 112.

The orbit control information generator 112 uses the various information items acquired from the orbit information acquirer 111 to generate orbit control information indicating the orbit and the phase in which, after the observation interval, the target observation satellite 200S flies vertically above the intersection point between the ground surface of the celestial body 5 and the straight line connecting the center of the celestial body 5 and the preceding observation satellite 200F at the observation time of the preceding observation satellite 200F. The orbit control information generator 112 feeds the generated orbit control information to the orbit control information outputter 113 together with the various information items acquired from the orbit information acquirer 111.

The orbit control information outputter 213 outputs various information items including the orbit control information acquired from the orbit control information generator 212 to the ground transmitter 120.

The ground transmitter 120 transmits the orbit control information received from the orbit control information outputter 213, and the observation region information, the observation angle information, and the observation interval information acquired by the orbit information acquirer 111 to each observation satellite 200 as observation instruction information. The ground transmitter 120 is an example of ground transmission means in an aspect of the present invention.

The ground receiver 130 receives observation information transmitted from the observation satellite 200 when the observation instruction information is transmitted from the ground transmitter 120. The observation information includes an observation image acquired by the observation satellite 200 that has received the observation instruction information. The ground receiver 130 feeds the observation information received from the observation satellite 200 to the observation image storage 140.

The observation image storage 140 stores the observation image included in the observation information acquired from the ground receiver 130, and feeds the observation image to the observation image analyzer 150.

The observation image analyzer 150 sequentially subjects observation images of the same observation region acquired from the observation image storage 140 to pixel integration to generate a composite image.

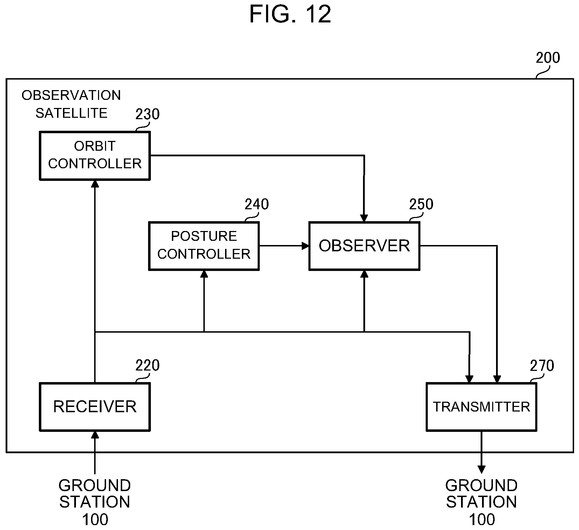

As shown in FIG. 12, each observation satellite 200 according to Embodiment 3 includes, as its functional units, a receiver 220, an orbit controller 230, a posture controller 240, an observer 250, and a transmitter 270.

The receiver 220 receives observation instruction information transmitted from the ground station 100 and feeds the received observation instruction information to each component.

The orbit controller 230 controls the orbit of the target observation satellite 200S by, for example, causing the thrusters to inject a propellant for thrust production based on the orbit control information included in the observation instruction information acquired from the receiver 220. Upon completion of the orbit control for the target observation satellite 200S, the orbit controller 230 outputs an orbit control completion signal to the observer 250.

The posture controller 240 calculates the relative posture of the preceding observation satellite 200F to the celestial body 5 at the observation time of the preceding observation satellite 200F based on the observation instruction information. The posture controller 240 then controls the posture of the target observation satellite 200S, allowing the target observation satellite 200S to have the same relative posture as the calculated relative posture after the observation interval. Upon completion of the posture control for the target observation satellite 200S, the posture controller 240 outputs a posture control completion signal to the observer 250.

After the observer 250 receives the orbit control completion signal from the orbit controller 230 and the posture control completion signal from the posture controller 240, and after the observation interval, the observer 250 emits a microwave to an observation region on the celestial body 5 and receives the resultant reflected wave to generate an observation image representing the state of the observation region. The observer 250 outputs the generated observation image to the transmitter 270.

The transmitter 270 may be implemented by a reception circuit and a transmitting antenna that transmits a radio signal. The reception circuit performs a transmission process such as encoding, modulation, or digital-analog conversion on the observation image received from the observer 250 and the observation instruction information received from the receiver 220. The transmitter 270 subjects the observation image and the observation instruction information to the transmission process before transmitting the resultant information to the ground station 100 as observation information.

As described above, in the formation flight system 1 according to Embodiment 3, unlike Embodiments 1 and 2, the ground station 100 includes the formation flight control device 110 and transmits observation instruction information including orbit control information to each of the observation satellites 200. The ground station 100 receives observation information transmitted from the observation satellite 200 in response to the observation instruction information, and sequentially subjects the observation images included in the observation information to pixel integration to generate a composite image.

Thus, the formation flight system 1 according to Embodiment 3 also enables all the observation satellites 200 included in the observation satellite group 200G to observe the same observation region at the same observation angle, and thus improves the signal-to-noise ratio of the composite image produced by sequentially subjecting observation images acquired by the ground station 100 to pixel integration.

### Embodiment 4

In Embodiments 1 to 3, observation instruction information and observation information are communicated directly between the ground station 100 and the observation satellites 200 or between the observation satellites 200. However, the information may be communicated through a relay.

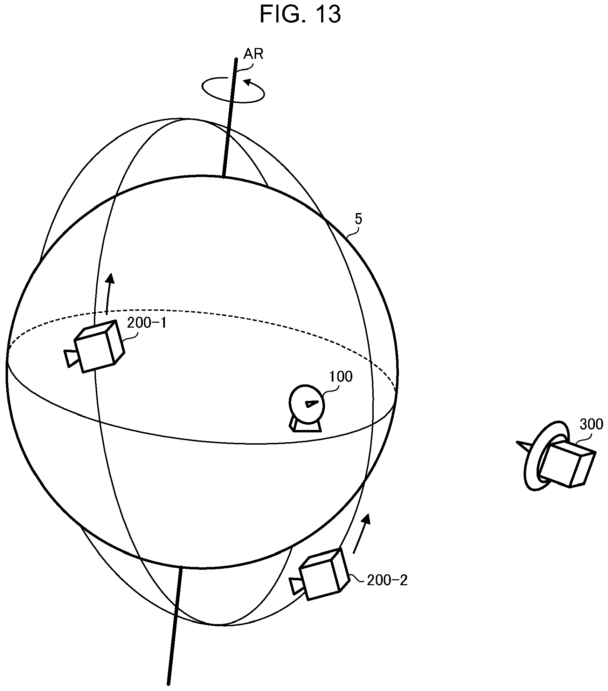

As shown in FIG. 13, a formation flight system 1 according to Embodiment 4 includes a geostationary relay satellite 300 that revolves around the celestial body 5 in the period in which the celestial body 5 rotates on its axis, and relays data communications between a ground station 100 and observation satellites 200 or between the observation satellites 200. The formation flight system 1 according to Embodiment 4 allows observation information to be communicated through the geostationary relay satellite 300 for, for example, satellites that are too far away from each other to communicate, like the observation satellite 200-1 and the observation satellite 200-2 shown in FIG. 13.

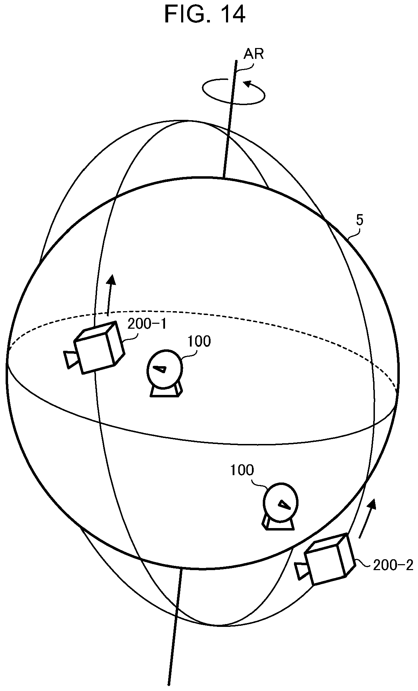

As shown in FIG. 14, the observation satellite 200-1 and the observation satellite 200-2 may communicate data to each other via one or more ground stations 100 installed on the celestial body 5.

The formation flight system 1 according to Embodiment 4 also enables all the observation satellites 200 included in the observation satellite group 200G to observe the same observation region at the same observation angle, and thus improves the signal-to-noise ratio of the composite image produced by sequentially subjecting observation images to pixel integration.

### Embodiment 5

The formation flight system 1 according to Embodiments 1 to 4 may be used in a sand observation system that observes the state of sand over a ground surface of the celestial body 5.

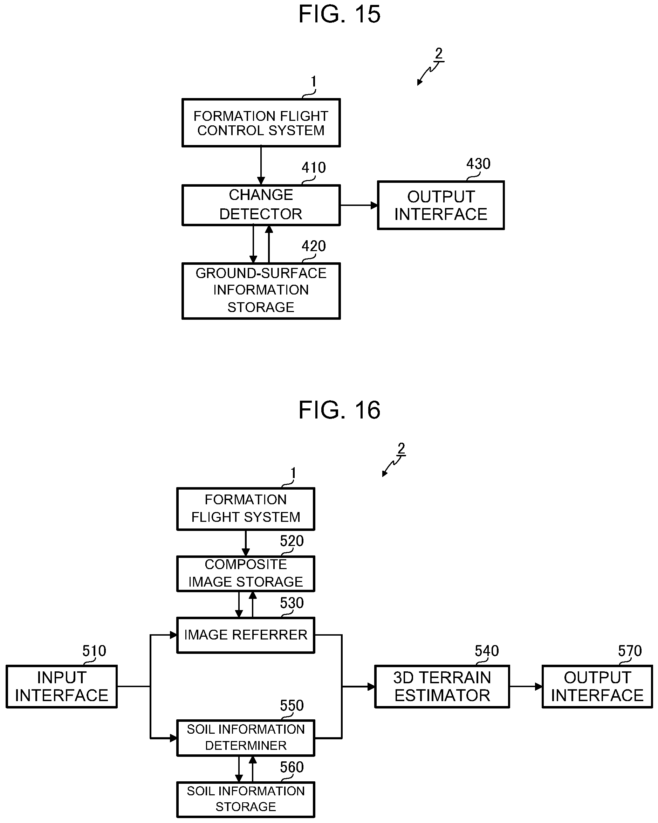

As shown in FIG. 15, a sand observation system 2 according to Embodiment 5 includes the formation flight system 1 according to Embodiments 1 to 4, a change detector 410, a ground-surface information storage 420, and an output interface 430.

The ground-surface information storage 420 may store ground-surface information including, for example, an observation image of the ground surface and numerical data associated with a position on the ground surface. The ground-surface information storage 420 is an example of ground-surface information storage means in an aspect of the present invention. In the present embodiment described below, the ground-surface information is a composite image produced by the formation flight system 1.

The formation flight system 1 feeds, to the change detector 410, a composite image subjected to pixel integration with the method according to any of Embodiments 1 to 4. The change detector 410 extracts, from the ground-surface information storage 420, a previous composite image produced by observing the same region as the composite image acquired from the formation flight system 1. The change detector 410 compares the composite image acquired from the formation flight system 1 with the composite image extracted from the ground-surface information storage 420 to detect the difference, and feeds the change to the output interface 430. The composite image acquired from the formation flight system 1 is stored into the ground-surface information storage 420. The change detector 410 is an example of change detection means in an aspect of the present invention.

The sand observation system 2 according to Embodiment 5 also enables all the observation satellites 200 included in the observation satellite group 200G to observe the same observation region at the same observation angle, and thus improves the signal-to-noise ratio of the composite image produced by sequentially subjecting observation images to pixel integration.

### Embodiment 6

A sand observation system 2 for estimating the shape of a sandhill on the celestial body 5 will now be described. As shown in FIG. 16, the sand observation system 2 according to Embodiment 6 includes the formation flight system 1 according to Embodiments 1 to 4, an input interface 510, a composite image storage 520, an image referrer 530, a 3D terrain estimator 540, a soil information determiner 550, a soil information storage 560, and an output interface 570.

Estimation target information specifying a sandhill to be estimated is acquired through the input interface 510. A sandhill may be specified using any method through the input interface 510. A method of specifying a sandhill may be, for example, a way of displaying a map and specifying a figure or a rectangle including the figure on the map as a target region, or a way of specifying a target region by longitude and latitude. The input interface 510 feeds the estimation target information indicating a target region to the image referrer 530 and the soil information determiner 550.

The formation flight system 1 stores a composite image subjected to pixel integration with the method according to any of Embodiments 1 to 4 into the composite image storage 520. The image referrer 530 extracts, from the composite image storage 520, a composite image including the estimation target region indicated by the estimation target information acquired through the input interface 510, and feeds the extracted composite image to the 3D terrain estimator 540.

The composite image is assumed to include radio wave emission direction information indicating the direction in which a radio wave such as a microwave is emitted, or the observation direction of each observation satellite 200 including a synthetic-aperture radar. The composite image storage 520 is an example of composite image storage means in an aspect of the present invention. The image referrer 530 is an example of image reference means in an aspect of the present invention.

The soil information determiner 550 extracts, from soil information stored in the soil information storage 560, soil information about the estimation target sandhill indicated by the estimation target information fed from the input interface 510, and feeds the extracted soil information to the 3D terrain estimator 540. The soil information storage 560 may prestore overall soil information over the celestial body 5 or acquire soil information as appropriate through the Internet. Example soil information indicates that the soil of a sandhill is sand or gravel.

The 3D terrain estimator 540 uses the composite image, the radio wave incident direction information, and the soil information to generate 3D terrain estimation information indicating the estimation results of the estimation target 3D terrain acquired by processing the composite image, and feeds the generated information to the output interface 570. The 3D terrain estimator 540 is an example of 3D terrain estimation means in an aspect of the present invention.

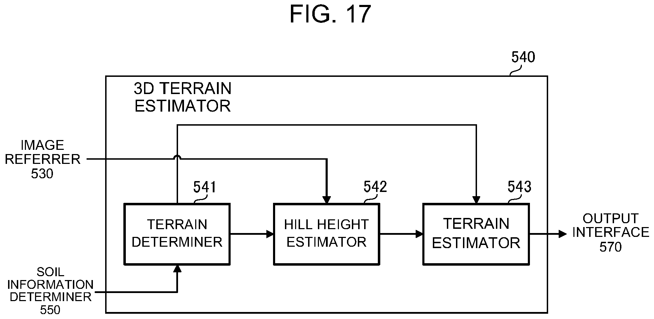

As shown in FIG. 17, the 3D terrain estimator 540 includes, for example, a terrain determiner 541, a hill height estimator 542, and a terrain estimator 543.

Based on the light and shade indicated by pixel values in the composite image acquired from the image referrer 530 and the radio wave emission direction information included in the composite image, the terrain determiner 541 determines that the light and shade in the composite image are caused by a conical hill. The terrain determiner 541 locally holds a 3D terrain model formed of, for example, a plane, a cone, and a light emission direction, and automatically represents the composite image acquired from the image referrer 530 as the 3D terrain model.

The terrain determiner 541 may model the shape of a hill not only as a cone but also as a quadrangular pyramid to more precisely determine the shape that causes the light and shade in the composite image. The radio wave emission direction information that can be generated automatically from the composite image may not be included in the composite image.

When determining that light and shade in the composite image are caused by a hill, the terrain determiner 541 calculates a cone radius R based on the size of the conical area forming the light and shade, and feeds the calculated value to the hill height estimator 542. The hill height estimator 542 calculates a cone height H based on the cone radius R acquired from the terrain determiner 541 and the angle of repose θ_{R} depending on the soil type indicated by the soil information about the estimation target, and feeds the calculated value to the terrain estimator 543. The angle of repose θ_{R} is the maximum angle formed by the horizontal plane and the slope of a sandhill at which the sandhill can be maintained without slumping, and depends on, for example, the grain size and the grain shape. The terrain determiner 541 further feeds coordinate information including the cone radius R and the coordinates of the bottom center of the cone to the terrain estimator 543.

The terrain estimator 543 estimates the conical terrain based on the various information items acquired from the terrain determiner 541 and the cone height H and the cone radius R acquired from the hill height estimator 542. The terrain estimator 543 thus generates 3D terrain estimation information modeling the hill area determined by the terrain determiner 541, as a cone located on a plane, and feeds the generated information to the output interface 570.

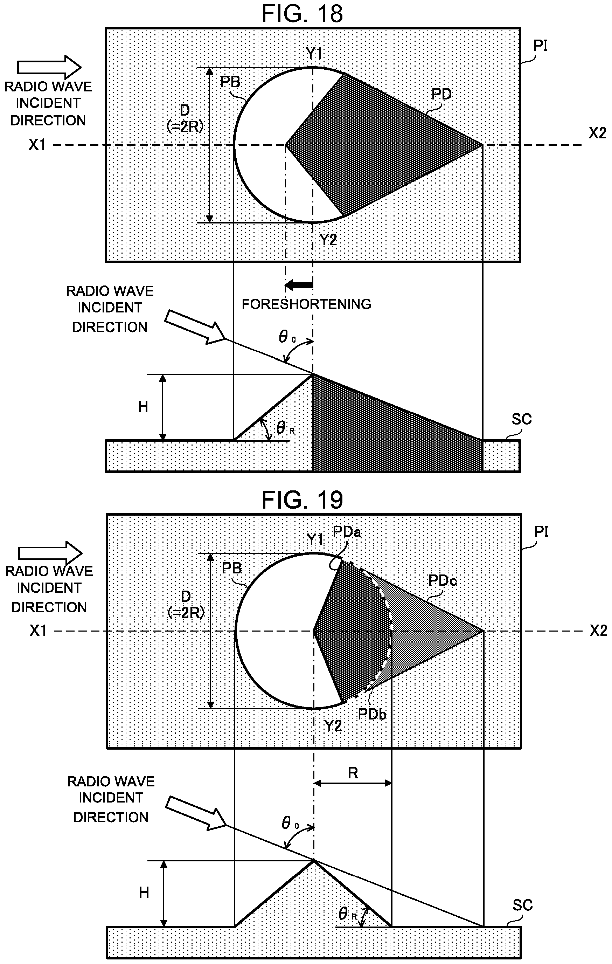

FIG. 18 shows a composite image fed to the terrain determiner 541 and an image of a real terrain. In this example, the relationship between the angle of incidence θ₀ and the angle of repose θ_{R} is expressed by θ_{R} < θ₀.

In this case, the foreshortening effect occurs to cause the displayed hill to be nearer the observation satellite 200 than the true plane position, and the radar shadow effect occurs to shade the slope opposite to the microwave emitter. The upper part of FIG. 18 is the composite image, and the lower part of FIG. 18 is a cross-sectional view of the real terrain showing a section SC corresponding to section X1-X2 in the composite image. The composite image in the upper part is divided into a bright part PB, an intermediate part PI, and a dark part PD represented by three gradations of brightness.

The terrain determiner 541 determines the intermediate part PI as a plane, and determines, based on the radio wave emission direction and the bright part PB shaped as a fan, an area including the fan-shaped bright part PB as a cone. The dark part PD is a radar shadow, or an area hidden from the emission radar, and the ground surface of the area is unobservable. In the section SC of the lower part, the area is unmeasurable. The top of the bright part PB, or the highest part, is displaced toward the radio wave emitter due to the foreshortening effect. However, in a plan view, the positional information about the direction vertical to the radio wave emission direction is unchanged.

The hill height estimator 542 thus measures the maximum width of the fan-shaped bright part PB, or the radio wave irradiation region, as a cone diameter D, and determines half of the value as the cone radius R. The terrain determiner 541 also assumes that the apex of the cone is positioned on the segment denoted by Y1-Y2 with the maximum width of the fan-shaped bright part PB in the direction vertical to the radio wave emission direction.

FIG. 19 is a schematic diagram showing a model in which the terrain estimator 543 has recognized a cone. The schematic diagram shows the relationship between the cone radius R, the angle of repose θ_{R}, and the cone height H. The lower part of FIG. 19 shows a section SC including the apex of the cone. The hill height estimator 542 calculates the cone height H from the equation, H = R × tanθ_{R}, and feeds the calculated value to the terrain estimator 543.

The bright part PB is modified into a fan shape having the radius R with the vertex positioned on line X1-X2 in the upper part of FIG. 19. The foreshortening is corrected in this manner. Similarly, a dark part PDa is modified into a fan shape having the radius R with the vertex positioned on line X1-X2. A dark part PDc is recognized as a part of the dark part PD belonging to the intermediate part PI, and represented as an area different in brightness from the dark part PDa.

A dark part PDb is the border between the dark part PDa and the dark part PDc, and the arc of the circular sector of the bright part PB and the dark part PDb form a circle having the radius R. In this manner, terrain information is acquired about a radar shadow that cannot be measured by the existing technique.

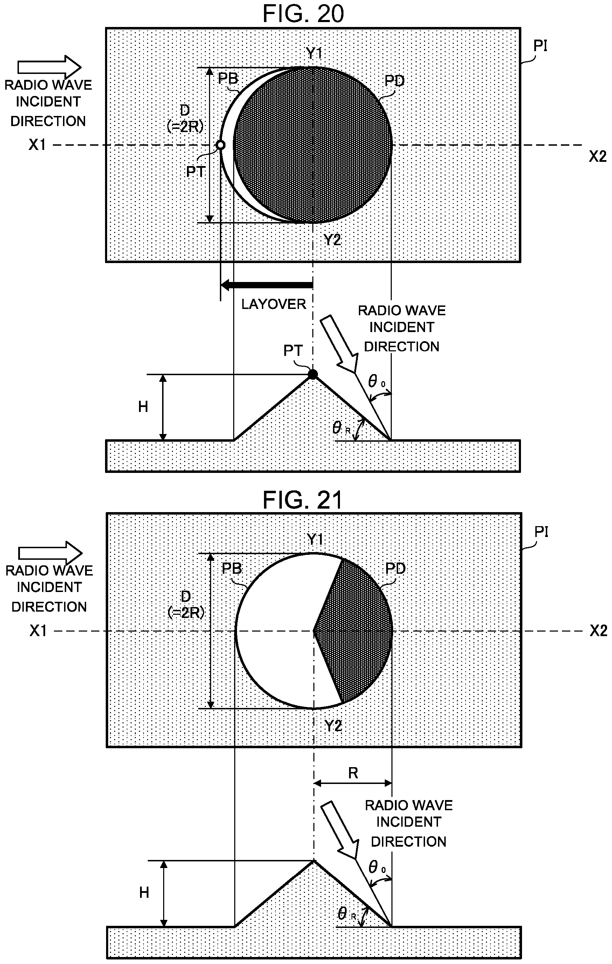

FIG. 20 is a diagram showing a composite image acquired by the terrain determiner 541 and a real terrain. In this example, the relationship between the angle of incidence θ₀ and the angle of repose θ_{R} is expressed by θ_{R} > θ₀.

In this case, the layover effect occurs in the observation image to reverse the upper area and the lower area, causing a whiteout. The upper part of FIG. 20 is the composite image, and the lower part of FIG. 20 is a cross-sectional view of the real terrain showing a section SC corresponding to section X1-X2 in the composite image.

The terrain determiner 541 determines the intermediate part PI as a plane, and determines, based on the radio wave emission direction and the crescent bright part PB, an area including the crescent bright part PB as a cone. The bright part PB is a layover area, or an area causing a whiteout image because a high area is nearer the observation satellite 200 than the plane, and the ground surface of the area is unobservable. The bright part PB has a top PT denoted by a white circle, or the highest part, displaced toward the radio wave emitter due to the layover effect.

Characteristically, the top PT moves to the plane outside the conical area on the screen. However, in a plan view, the positional information about the direction vertical to the radio wave emission direction is unchanged. The hill height estimator 542 thus determines the maximum width of the crescent bright part PB, or the radio wave irradiation region, as a cone diameter D, and half of the value as the cone radius R. In other cases, the hill height estimator 542 measures the diameter of the dark part PD and determines half of the value as the cone radius R. The terrain determiner 541 assumes that the apex of the cone is positioned on line Y1-Y2 with the maximum width of the crescent bright part PB in the direction vertical to the radio wave emission direction. In other cases, the terrain determiner 541 assumes the center of the circular dark part PD as the apex of the cone.

FIG. 21 is a schematic diagram showing a model in which the terrain estimator 543 has recognized a cone. The schematic diagram shows the relationship between the cone radius R, the angle of repose θ_{R}, and the cone height H. The lower part of FIG. 21 shows a section SC including the apex of the cone. The hill height estimator 542 calculates the cone height H from the equation, H = R × tanθ_{R}, and feeds the calculated value to the terrain estimator 543.

The bright part PB is modified into a fan shape having the radius R with the vertex positioned on line X1-X2 in the upper part of FIG. 21. The layover is corrected in this manner. Similarly, the dark part PD is modified into a fan shape having the radius R with the vertex on line X1-X2 in the figure. After the correction, the terrain estimator 543 generates 3D terrain estimation information.

In an example, the above functions may be used to determine the amount of excavated soil at a soil excavation site. The sand observation system 2 may compare the 3D terrain estimation information generated based on the composite image acquired before the excavation with the 3D terrain estimation information generated based on the composite image acquired after the excavation, and determine the difference as the amount of excavated soil. The sand observation system 2 that has known the components and the specific gravity of soil to be excavated may also estimate the weight of excavated soil.

As described above, the sand observation system 2 according to Embodiment 6 includes the formation flight system 1 according to Embodiments 1 to 4, and enables all the observation satellites 200 included in the observation satellite group 200G to observe the same observation region at the same observation angle, and thus improves the signal-to-noise ratio of the composite image produced by sequentially subjecting observation images to pixel integration. Additionally, when characteristic effects occur in an observation image due to the radio wave emission direction, the sand observation system 2 allows the 3D terrain estimator 540 to generate terrain estimation information close to the real terrain.

The present invention is not limited to the above embodiments, and may be altered and modified variously without departing from the spirit and scope of the present invention.

In the above embodiments, each observation satellite 200 uses a synthetic-aperture radar to observe the ground surface of the celestial body 5 to be observed. However, the observation satellite 200 may observe the ground surface of the celestial body 5 using a high-resolution optical sensor included in place of or together with the synthetic-aperture radar.

In the above embodiments, the program for the orbit control information generation process performed by the orbit control information generator 212 in the formation flight control device 210 is, for example, prestored in the ROM 215. However, the present invention is not limited to the example. The operation programs for the above various processes may be implemented in a general-purpose computer, a framework, or a workstation known in the art to function as a device corresponding to the formation flight control device 210 according to the above embodiments.

The programs may be provided in any manner and for example, distributed on non-transitory computer-readable recording media (flexible disks, compact disc or CD-ROMs, or digital versatile disc or DVD-ROMs). In other cases, the programs may be stored in a storage on a network such as the Internet and allowed to be downloaded.

The above processing may be shared and performed by an operating system (OS) and an application program or executed by the OS and the application program in cooperation with each other. In either case, the application program may be stored in a non-transitory recording medium or a storage. The program may be superimposed on a carrier wave to be distributed through a network. For example, the program may be posted on a bulletin board system (BBS) on a network and distributed through the network. The above processing may be designed to be performed by executing the program in the same manner as other application programs under the control of the OS.

The foregoing describes some example embodiments for explanatory purposes. Although the foregoing discussion has presented specific embodiments, persons skilled in the art will recognize that changes may be made in form and detail without departing from the scope of the invention. Accordingly, the specification and drawings are to be regarded in an illustrative rather than a restrictive sense. This detailed description, therefore, is not to be taken in a limiting sense, and the scope of the invention is defined only by the included claims.

### Reference Signs List

- 1: Formation flight system
- 2: Sand observation system
- 5: Celestial body
- 100: Ground station
- 110: Formation flight control device
- 111: Orbit information acquirer
- 112: Orbit control information generator
- 113: Orbit control information outputter
- 120: Ground transmitter
- 130: Ground receiver
- 140: Observation image storage
- 150: Observation image analyzer
- 200, 200-1, 200-2, 200-3, 200-N: Observation satellite
- 200B: Succeeding observation satellite
- 200F: Preceding observation satellite
- 200S: Target observation satellite
- 200G: Observation satellite group
- 210: Formation flight control device
- 211: Orbit information acquirer
- 212: Orbit control information generator
- 213: Orbit control information outputter
- 214: Processor
- 215: ROM
- 216: RAM
- 217: Auxiliary storage device
- 218: Input device
- 219: Output device
- 220: Receiver
- 230: Orbit controller
- 240: Posture controller
- 250: Observer
- 260: Observation image analyzer
- 270: Transmitter
- 300: Geostationary relay satellite
- 410: Change detector
- 420: Ground-surface information storage
- 430: Output interface
- 510: Input interface
- 520: Composite image storage
- 530: Image referrer
- 540: 3D terrain estimator
- 541: Terrain determiner
- 542: Hill height estimator
- 543: Terrain estimator
- 550: Soil information determiner
- 560: Soil information storage
- 570: Output interface
- a: Semi-major axis
- b: Semi-minor axis
- i: Orbital inclination
- Ω: Right ascension of ascending node
- ω: Argument of periapsis
- θ₀: Angle of incidence
- θ_{R}: Angle of repose
- AR: Axis of rotation
- BL: Bus line
- DI: Incident direction
- D: Cone diameter
- DV: Vertical direction
- H: Height of cone
- NPO-1, NPO-2, NPO-N: Non-polar orbit
- O: Orbit
- PO-1, PO-2, PO-3, PO-N: Polar orbit
- PG: Observation ground surface point
- PB: Bright part
- PI: Intermediate part
- PD, PDa, PDb, PDc Dark: part
- PT: Top
- R: Cone radius
- RD: Radio wave irradiation region
- SC: Section of terrain
- SL1, SL2: Straight line

## Claims

1. A formation flight control device (210;110) for generating and outputting orbit control information for controlling observation satellites (200) in an observation satellite group (200G) orbiting a celestial body (5) and sequentially observing a ground surface of the celestial body (5) with an observation interval,
the formation flight control device (210; 110) comprising:
- orbit information acquisition means (211;111) for acquiring orbit information indicating an observation time of a preceding observation satellite (200F) of which an observation order precedes by one, and an orbit of the preceding observation satellite (200F) at the observation time;
- orbit control information generation means (212; 112) configured for generating, based on the orbit information, the orbit control information indicating an orbit and a phase allowing flying an observation satellite (2005), after the observation interval of the preceding observation satellite, vertically above an intersection point between the ground surface and a straight line connecting a center of the celestial body (5) and the preceding observation satellite (200F) at the observation time; and
- orbit control information output means (213;113) for outputting the orbit control information.

2. The formation flight control device (210; 110) according to claim 1,
wherein the orbit control information generation means (212; 112) is configured to generate the orbit control information for the observation satellites (200) flying in polar orbits passing through a vicinity of a north pole and a south pole of the celestial body (5).

3. The formation flight control device (210; 110) according to claim 1,
wherein the orbit control information generation means (212; 112) is configured to generate the orbit control information for the observation satellites (200) flying in non-polar orbits not passing through a vicinity of a north pole and a south pole of the celestial body (5).

4. An observation satellite (200) comprising:
- a formation flight control device (210) according to any one of claims 1 to 3;
- reception means (220) for receiving observation information indicating an observation from the preceding observation satellite (200F);
- orbit control means (230) for controlling an orbit based on the orbit control information;
- posture control means (240) for calculating, based on the observation information, a relative posture of the preceding observation satellite (200F) to the celestial body (5) at the observation time, and performing control to have a posture identical to the relative posture of the preceding observation satellite (200F) after the observation interval;
- observation means (250) for observing, after the observation interval, an observation target on the celestial body (5), the observation target being observed by the preceding observation satellite (200F); and
- transmission means (270) for transmitting observation information including an observation by the observation means (250) to a succeeding observation satellite (200B) of which an observation order follows by one.

5. The observation satellite (200) according to claim 4,
wherein the observation satellite (200) includes a synthetic-aperture radar, and the observation means (250) is configured to observe the observation target with the synthetic-aperture radar.

6. A ground station (100) for transmitting observation instruction information for observation to each of a plurality of observation satellites (200) in an observation satellite group (200G) orbiting a celestial body (5) and sequentially observing a ground surface of the celestial body (5) with an observation interval, the ground station (100) comprising:
- a formation flight control device (110) according to claim 1, and
- ground transmission means (120) for transmitting observation instruction information including the orbit control information to a succeeding observation satellite (200B) of which an observation order follows by one.

7. A formation flight system (1) comprising:
- an observation satellite group (200G) of a plurality of satellites to orbit a celestial body (5), to sequentially observe a ground surface of the celestial body (5) with an observation interval, and to transmit observation information indicating an observation; and
- a ground station (100) to transmit observation instruction information for observation, and to receive the observation information indicating the observation from a satellite of the plurality of satellites,
- wherein the satellite or the ground station (100) includes a formation flight control device (110) according to any one of claims 1 to 3.

8. The formation flight system (1) according to claim 7,
further comprising:
a geostationary relay satellite (300) to relay communication between the plurality of satellites or between a satellite of the plurality of satellites and the ground station (100).

9. The formation flight system (1) according to claim 7 or 8,
further comprising:
observation image analysis means (260) for generating a composite image by subjecting observation images acquired by the plurality of satellites to pixel integration.

10. A sand observation system (2) comprising:
- a formation flight system (1) including
- an observation satellite group (200G) of a plurality of satellites to orbit a celestial body (5), to sequentially observe a ground surface of the celestial body (5) with an observation interval, and to transmit observation information indicating an observation,
- a ground station (100) to transmit observation instruction information for observation, and to receive the observation information indicating the observation from the satellite, and
- a formation flight control device (110) according to any one of claims 1 to 3;
- ground-surface information storage means (420) for storing ground-surface information about the celestial body (5);
- change detection means (410) for comparing a composite image fed from the formation flight system (1) and generated by subjecting observation images acquired by the plurality of satellites to pixel integration with ground-surface information stored in the ground-surface information storage means (420) and about an area identical to an area in the composite image, and detecting a change; and
an output interface (430) to output a place with the change.

11. A formation flight control method for generating and outputting orbit control information for controlling a plurality of observation satellites (200) in an observation satellite group (200G) orbiting a celestial body (5) and sequentially observing a ground surface of the celestial body (5) with an observation interval, the formation flight control method comprising:
- acquiring orbit information indicating an observation time of a preceding observation satellite (200F) of which an observation order precedes by one in the plurality of observation satellites (200) in the observation satellite group (200G) orbiting the celestial body (5) and sequentially observing the ground surface of the celestial body (5) with the observation interval, and an orbit of the preceding observation satellite (200F) at the observation time; and
- generating, based on the orbit information, orbit control information indicating an orbit and a phase allowing flying an observation satellite (2005), after the observation interval of the preceding observation satellite, vertically above an intersection point between the ground surface and a straight line connecting a center of the celestial body (5) and the preceding observation satellite (200F) at the observation time.

12. A program for causing a computer to function as
- orbit information acquisition means (211) for acquiring orbit information indicating an observation time of a preceding observation satellite (200F) of which an observation order precedes by one in a plurality of observation satellites (200) in an observation satellite group (200G) orbiting a celestial body (5) and sequentially observing a ground surface of the celestial body (5) with an observation interval, and an orbit of the preceding observation satellite (200F) at the observation time,
- orbit control information generation means (212) for generating, based on the orbit information, orbit control information indicating an orbit and a phase allowing flying an observation satellite (2005), after the observation interval of the preceding observation satellite, vertically above an intersection point between the ground surface and a straight line connecting a center of the celestial body (5) and the preceding observation satellite (200F) at the observation time, and
- orbit control information output means (213) for outputting the orbit control information.

## Patentansprüche

1. Ein Formationsflug-Steuergerät (210; 110) zum Generieren und Ausgeben von Orbit-Steuerungsinformation zur Steuerung von Beobachtungssatelliten (200) in einer Beobachtungssatellitengruppe (200G), welche einen Himmelskörper (5) umkreisen und sequentiell einen Bodenbereich des Himmelskörpers (5) mit einem Beobachtungsintervall beobachten,
wobei das Formationsflug-Steuergerät (210; 110) umfasst:
- Orbit-Informations-Akquise-mittel (211; 111) zur Akquise von Orbit-Information, welche eine eine Beobachtungszeit eines vorhergehenden Beobachtungssatelliten (200F), der in einer Beobachtungsreihenfolge um eins vorangestellt ist, und einen Orbit des vorhergehenden Beobachtungssatelliten (200F) zum Beobachtungszeitpunkt umfasst;
- Orbit-Steuerungsinformation Erzeugungsmittel (212;112), dazu konfiguriert, basierend auf der Orbit-Information, Orbit-Steuerungsinformation und eine Phase zu erzeugen, die es es erlaubt, einen Beobachtungssatelliten (200S) nach dem Beobachtungsintervall des vorhergehenden Beobachtungssatelliten vertikal über einem Schnittpunkt zwischen dem Bodenbereich und einer geraden Linie, welche den Mittelpunkt des Himmelskörpers (5) und den vorhergehenden Beobachtungssatelliten (200F) zum Beobachtungszeitpunkt verbindet, fliegen zu lassen; und
- Orbit-Steuerungsinformation Ausgabemittel (213; 113) zur Ausgabe der Orbit-Steuerungsinformation.

2. Das Formationsflug-Steuergerät (210; 110) nach Anspruch 1,
wobei die Orbit-Steuerungsinformation Erzeugungsmittel (212; 112) dazu ausgelegt sind die Orbit-Steuerungsinformation für Beobachtungssatelliten (200), welche auf polaren Orbits durch eine Umgebung eines Nord- und Südpols des Himmelskörpers (5) führen, zu erzeugen.

3. Das Formationsflug-Steuergerät (210; 110) nach Anspruch 1,
wobei die Orbit-Steuerungsinformation Erzeugungsmittel (212; 112) dazu ausgelegt sind die Orbit-Steuerungsinformation für Beobachtungssatelliten (200), welche auf nicht-polaren Orbits welche nicht durch eine Umgebung eines Nord- und Südpols des Himmelskörpers (5) führen, zu erzeugen.

4. Ein Beobachtungssatellit (200) umfassend:
- ein Formationsflug-Steuergerät (210) nach einem der Ansprüche 1 bis 3;
- Empfangsmittel (220) zum Empfangen von Beobachtungsinformation, welche eine Beobachtung eines vorhergehenden Beobachtungssatelliten (200F) indiziert;
- Orbit-Steuerungsmittel (230) zu Steuerung eines Orbits basierend auf der Orbit-Steuerungsinformation;
- Ausrichtungs-Steuerungsmittel (240) zur Berechnung, basierend auf der Beobachtungsinformation, eine relative Ausrichtung des vorhergehenden Beobachtungssatelliten (200F) zum Himmelskörper (5) zum Beobachtungszeitpunkt und Steuerung zur Einhaltung einer identischen relativen Ausrichtung zum vorhergehenden Beobachtungssatelliten (200F) nach dem Beobachtungsintervall;
- Beobachtungsmittel (250) zur Beobachtung eines Beobachtungsziels auf dem Himmelskörper (5), nach dem Beobachtungsintervall, wobei das Beobachtungsziel durch den vorhergehenden Beobachtungssatelliten (200F) beobachtet wird; und
- Transmissionsmittel (270) zur Transmission von Beobachtungsinformation, umfassend eine Beobachtung durch Beobachtungsmittel (250), an einen nachfolgenden Beobachtungssatelliten (200B), welcher in der Beobachtungsreihenfolge um eins nachfolgt.

5. Der Beobachtungssatellit (200) nach Anspruch 4,
wobei der Beobachtungssatellit (200) ein synthetic-aperture-Radar umfasst, und die Beobachtungsmittel (250) dazu ausgestaltet sind, das Beobachtungsziel mit dem synthetic-aperture-Radar zu beobachten.

6. Eine Bodenstation (100) zur Transmission von Beobachtungsanweisungsinformation zur Beobachtung an jeden einer Vielzahl von Beobachtungssatelliten (200) in einer Beobachtungssatellitengruppe (200G), welche einen Himmelskörper (5) umkreisen und sequentiell einen Bodenbereich des Himmelskörpers (5) mit einem Beobachtungsintervall beobachten, umfassend:
- ein Formationsflug-Steuergerät (110) nach Anspruch 1, und
- Bodentransmissionsmittel (120) zur Transmission von Beobachtungsanweisungsinformation, umfassend die Orbit-Steuerungsinformation, an einen nachfolgenden Beobachtungssatelliten (200B), welcher in der Beobachtungsreihenfolge um eins nachfolgt.

7. Ein Formationsflugsystem (1) umfassend:
- eine Beobachtungssatellitengruppe (200G) einer Vielzahl an Satelliten, um einen Himmelskörper (5) umkreisen und sequentiell einen Bodenbereich des Himmelskörpers (5) mit einem Beobachtungsintervall beobachten, und um Beobachtungsinformation, welche eine Beobachtung indiziert, zu transmittieren; und
- eine Bodenstation (100) zur Transmission von Beobachtungsanweisungsinformation zur Beobachtung und zum Empfang von Beobachtungsinformation von einem Satelliten der Vielzahl an Satelliten,
- wobei die Bodenstation (100) ein Formationsflug-Steuergerät (110) nach einem der Ansprüche 1 bis 3 umfasst.

8. Das Formationsflugsystem (1) nach Anspruch 7, weiter umfassend:
einen geostationären Übermittlungssatelliten (300) zu Übermittlung von Kommunikation zwischen der Vielzahl an Satelliten oder zwischen einem Satellit der Vielzahl an Satelliten und der Bodenstation (100).

9. Das Formationsflugsystem (1) nach Anspruch 7 oder 8, weiter umfassend:
Beobachtungsbild Analysemittel (260) zur Erzeugung eines zusammengesetzten Bildes durch die Anwendung von Pixel-Integration auf Beobachtungsbilder, welche von der Vielzahl von Satelliten aufgenommen wurden.

10. Ein Sand-Beobachtungssystem (2) umfassend:
- ein Formationsflugsystem (1) umfassend
- eine Beobachtungssatellitengruppe (200G) einer Vielzahl an Satelliten, um einen Himmelskörper (5) umkreisen und sequentiell einen Bodenbereich des Himmelskörpers (5) mit einem Beobachtungsintervall beobachten, und um Beobachtungsinformation, welche eine Beobachtung indiziert, zu transmittieren,
- eine Bodenstation (100) zur Transmission von Beobachtungsanweisungsinformation zur Beobachtung und zum Empfang von Beobachtungsinformation von dem Satelliten, und
- ein Formationsflug-Steuergerät (110) nach einem der Ansprüche 1 bis 3;
- Bodenoberflächen-Informationsspeicher (420), um Bodenoberflächen-Information über den Himmelskörper (5) zu speichern;
- Veränderungs-Detektionsmittel (410), zum Vergleichen eines zusammengesetzten Bildes empfangen vom Formationsflugsystem (1) und gebildet durch die Anwendung von Pixel-Integration auf Beobachtungsbilder, welche von der Vielzahl von Satelliten aufgenommen wurden, mit Bodenoberflächen-Information, welche im Bodenoberflächen-Informationsspeicher (420) gespeichert ist, und eine Fläche betrifft, die identisch mit einer Fläche im zusammengesetzten Bild ist, um eine Veränderung zu erfassen; und
- ein Ausgabe-Interface (430) um einen Ort der Veränderung auszugeben.

11. Ein Verfahren zur Formationsflug-Steuerung zum Generieren und Ausgeben von Orbit-Steuerungsinformation zur Steuerung einer Vielzahl von Beobachtungssatelliten (200) in einer Beobachtungssatellitengruppe (200G), welche einen Himmelskörper (5) umkreisen und sequentiell einen Bodenbereich des Himmelskörpers (5) mit einem Beobachtungsintervall beobachten,
wobei das Verfahren zur Formationsflug-Steuerung umfasst:
- Akquise von Orbit-Information, welche eine eine Beobachtungszeit eines vorhergehenden Beobachtungssatelliten (200F), der in einer Beobachtungsreihenfolge der Vielzahl von Beobachtungssatelliten (200), die den Himmelskörper (5) umkreisen und sequentiell einen Bodenbereich des Himmelskörpers (5) mit einem Beobachtungsintervall beobachten, um eins vorangestellt ist, und einen Orbit des vorhergehenden Beobachtungssatelliten (200F) zum Beobachtungszeitpunkt und;
- erzeugen von Orbit-Steuerungsinformation, basierend auf der Orbit-Information, Orbit-Steuerungsinformation und eine Phase, die es es erlaubt, einen Beobachtungssatelliten (200S) nach dem Beobachtungsintervall des vorhergehenden Beobachtungssatelliten vertikal über einem Schnittpunkt zwischen dem Bodenbereich und einer geraden Linie, welche den Mittelpunkt des Himmelskörpers (5) und den vorhergehenden Beobachtungssatelliten (200F) zum Beobachtungszeitpunkt verbindet, fliegen zu lassen.

12. Ein Programm, welches einen Computer dazu veranlasst als
- Orbit-Informations-Akquise-mittel (211) zur Akquise von Orbit-Information, welche eine eine Beobachtungszeit eines vorhergehenden Beobachtungssatelliten (200F), der in einer Beobachtungsreihenfolge um eins vorangestellt ist, in einer Vielzahl von Beobachtungssatelliten (200), die den Himmelskörper (5) umkreisen und sequentiell einen Bodenbereich des Himmelskörpers (5) mit einem Beobachtungsintervall beobachten und einen Orbit des vorhergehenden Beobachtungssatelliten (200F) zum Beobachtungszeitpunkt umfasst;
- Orbit-Steuerungsinformation Erzeugungsmittel (212), dazu konfiguriert, basierend auf der Orbit-Information, Orbit-Steuerungsinformation und eine Phase zu erzeugen, die es es erlaubt, einen Beobachtungssatelliten (200S) nach dem Beobachtungsintervall des vorhergehenden Beobachtungssatelliten vertikal über einem Schnittpunkt zwischen dem Bodenbereich und einer geraden Linie, welche den Mittelpunkt des Himmelskörpers (5) und den vorhergehenden Beobachtungssatelliten (200F) zum Beobachtungszeitpunkt verbindet, fliegen zu lassen; und
- Orbit-Steuerungsinformation Ausgabemittel (213) zur Ausgabe der Orbit-Steuerungsinformation
zu fungieren.

## Revendications

1. Dispositif de commande de vol en formation (210 ; 110) destiné à générer et à sortir des informations de commande d'orbite pour commander des satellites d'observation (200) dans un groupe de satellites d'observation (200G) en orbite autour d'un corps céleste (5) et observant séquentiellement une surface du sol du corps céleste (5) avec un intervalle d'observation,
le dispositif de commande de vol en formation (210 ; 110) comprenant :
- un moyen d'acquisition d'informations d'orbite (211 ; 111) destiné à acquérir des informations d'orbite indiquant un moment d'observation d'un satellite d'observation précédent (200F) dont un ordre d'observation précède à raison de un, et une orbite du satellite d'observation précédent (200F) au moment de l'observation ;
- un moyen de génération d'informations de commande d'orbite (212 ; 112) configuré pour générer, sur la base des informations d'orbite, des informations de commande d'orbite indiquant une orbite et une phase permettant un vol d'un satellite d'observation (200S), après l'intervalle d'observation du satellite d'observation précédent, verticalement au-dessus d'un point d'intersection entre la surface du sol et une ligne droite connectant un centre du corps céleste (5) et le satellite d'observation précédent (200F) au moment de l'observation ; et
- un moyen de sortie d'informations de commande d'orbite (213 ; 113) destiné à sortir les informations de commande d'orbite.

2. Dispositif de commande de vol en formation (210 ; 110) selon la revendication 1,
dans lequel le moyen de génération d'informations de commande d'orbite (212 ; 112) est configuré pour générer les informations de commande d'orbite pour les satellites d'observation (200) volant dans des orbites polaires passant par un voisinage d'un pôle nord et d'un pôle sud du corps céleste (5).

3. Dispositif de commande de vol en formation (210 ; 110) selon la revendication 1,
dans lequel le moyen de génération d'informations de commande d'orbite (212 ; 112) est configuré pour générer les informations de commande orbite pour les satellites d'observation (200) volant dans des orbites non polaires ne passant pas par un voisinage d'un pôle nord et d'un pôle sud du corps céleste (5).

4. Satellite d'observation (200) comprenant :
- un dispositif de commande de vol en formation (210) selon l'une quelconque des revendications 1 à 3 ;
- un moyen de réception (220) destiné à recevoir des informations d'observation indiquant une observation depuis le satellite d'observation précédent (200F) ;
- un moyen de commande d'orbite (230) destiné à commander une orbite sur la base des informations de commande d'orbite ;
- un moyen de commande de posture (240) destiné à calculer, sur la base des informations d'observation, une posture relative du satellite d'observation précédent (200F) par rapport au corps céleste (5) au moment de l'observation, et à effectuer une commande pour avoir une posture identique à la posture relative du satellite observation précédent (200F) après l'intervalle d'observation ;
- un moyen d'observation (250) destiné à observer, après l'intervalle d'observation, une cible d'observation sur le corps céleste (5), la cible d'observation étant observée par le satellite d'observation précédent (200F) ; et
- un moyen de transmission (270) destiné à transmettre des informations d'observation, incluant une observation par le moyen d'observation (250), à un satellite d'observation suivant (200B) dont un ordre d'observation suit à raison de un.

5. Satellite d'observation (200) selon la revendication 4,
dans lequel le satellite d'observation (200) inclut un radar à synthèse d'ouverture, et le moyen d'observation (250) est configuré pour observer la cible d'observation avec le radar à synthèse d'ouverture.

6. Station au sol (100) destinée à transmettre des informations d'instructions d'observation à des fins d'observation à chacun d'une pluralité de satellites d'observation (200) dans un groupe de satellites d'observation (200G) en orbite autour d'un corps céleste (5) et observant une surface du sol du corps céleste (5) avec un intervalle d'observation, la station au sol (100) comprenant :
- un dispositif de commande de vol en formation (110) selon la revendication 1, et
- un moyen de transmission au sol (120) destiné à transmettre des informations d'instructions d'observation incluant les informations de commande d'orbite à un satellite d'observation suivant (200B) dont un ordre d'observation suit à raison de un.

7. Système de vol en formation (1) comprenant :
- un groupe de satellites d'observation (200G) constitué d'une pluralité de satellites pour être en orbite autour d'un corps céleste (5), pour observer séquentiellement une surface du sol du corps céleste (5) avec un intervalle d'observation, et pour transmettre des informations d'observation indiquant une observation ; et
- une station au sol (100) pour transmettre des informations d'instructions d'observation à des fins d'observation, et pour recevoir les informations d'observation indiquant l'observation depuis un satellite de la pluralité de satellites,
dans lequel le satellite ou la station au sol (100) inclut un dispositif de commande de vol en formation (110) selon l'une quelconque des revendications 1 à 3.

8. Système de vol en formation (1) selon la revendication 7, comprenant en outre :
un satellite relais géostationnaire (300) pour relayer une communication entre la pluralité de satellites ou entre un satellite de la pluralité de satellites et la station au sol (100).

9. Système de vol en formation (1) selon la revendication 7 ou 8, comprenant en outre :
un moyen d'analyse d'images d'observation (260) destiné à générer une image composite en soumettant des images d'observation acquises par la pluralité de satellites à une intégration de pixels.

10. Système d'observation de sable (2) comprenant :
- un système de vol en formation (1) incluant
- un groupe de satellites d'observation (200G) constitué d'une pluralité de satellites pour être en orbite autour d'un corps céleste (5), pour observer séquentiellement une surface du sol du corps céleste (5) avec un intervalle d'observation, et pour transmettre des informations d'observation indiquant une observation,
- une station au sol (100) pour transmettre des informations d'instructions d'observation à des fins d'observation, et pour recevoir les informations d'observation indiquant l'observation depuis le satellite, et
- un dispositif de commande de vol en formation (110) selon l'une quelconque des revendications 1 à 3 ;
- un moyen de stockage d'informations de surfaces du sol (420) destiné à stocker des informations de surfaces du sol concernant le corps céleste (5) ;
- un moyen de détection de changement (410) destiné à comparer une image composite, alimentée depuis le système de vol en formation (5) et générée en soumettant des images d'observation acquises par la pluralité de satellites à une intégration de pixels, à des informations de surfaces du sol stockées dans le moyen de stockage d'informations de surfaces du sol (420) et concernant une zone identique à une zone dans l'image composite, et à détecter un changement ; et
une interface de sortie (430) pour sortir un endroit avec le changement.

11. Procédé de commande de vol en formation destiné à générer et à sortir des informations de commande d'orbite pour commander une pluralité de satellites d'observation (200) dans un groupe de satellites d'observation (200G) en orbite autour d'un corps céleste (5) et observant séquentiellement une surface du sol du corps céleste (5) avec un intervalle d'observation,
le procédé de commande de vol en formation comprenant les étapes consistant à :
- acquérir des informations d'orbite indiquant un moment d'observation d'un satellite d'observation précédent (200F) dont un ordre d'observation précède à raison de un dans le groupe de satellites d'observation (200G) en orbite autour du corps céleste (5), et observer séquentiellement la surface du sol du corps céleste (5) avec l'intervalle d'observation, et une orbite du satellite d'observation précédent (200F) au moment de l'observation ; et
- générer, sur la base des informations d'orbite, des informations de commande d'orbite indiquant une orbite et une phase permettant un vol d'un satellite d'observation (200S), après l'intervalle d'observation du satellite d'observation précédent, verticalement au-dessus d'un point d'intersection entre la surface du sol et une ligne droite connectant un centre du corps céleste (5) et le satellite d'observation précédent (200F) au moment de l'observation.

12. Programme destiné à amener un ordinateur à fonctionner comme
- un moyen d'acquisition d'informations d'orbite (211) destiné à acquérir des informations d'orbite indiquant un moment d'observation d'un satellite d'observation précédent (200F) dont un ordre d'observation précède à raison de un dans une pluralité de satellites d'observation (200) dans un groupe de satellites d'observation (200G) en orbite autour d'un corps céleste (5) et observant séquentiellement une surface du sol du corps céleste (5) avec un intervalle d'observation, et une orbite du satellite d'observation précédent (200F) au moment de l'observation ;
- un moyen de génération d'informations de commande d'orbite (212) configuré pour générer, sur la base des informations d'orbite, des informations de commande d'orbite indiquant une orbite et une phase permettant un vol d'un satellite d'observation (200S), après l'intervalle d'observation du satellite d'observation précédent, verticalement au-dessus d'un point d'intersection entre la surface du sol et une ligne droite connectant un centre du corps céleste (5) et le satellite d'observation précédent (200F) au moment de l'observation, et
- un moyen de sortie d'informations de commande d'orbite (213) destiné à sortir les informations de commande d'orbite.
